# EUROPEAN PATENT APPLICATION

(11) **EP 4 033 254 A1**
(43) Date of publication of application: **27.07.2022**
(21) Application number: 20865166.1
(22) Date of filing: 04.03.2020
(51) Int. Cl.: G01N 35/10

(54) **AUTOMATED ANALYSIS DEVICE**

(30) Priority: 20.09.2019 JP 2019171551
(71) Applicant: Hitachi High-Tech Corporation, Minato-ku Tokyo 105-6409 (JP)
(72) Inventor: HIRAMA, Hiromi, Tokyo 105-6409 (JP); FUJITA, Akinao, Tokyo 105-6409 (JP); MIYAKAWA, Takushi, Tokyo 105-6409 (JP); ARUGA, Yoichi, Tokyo 105-6409 (JP); INOUE, Yoko, Tokyo 105-6409 (JP)
(74) Representative: Strehl Schübel-Hopf & Partner
(86) International application number: PCT/JP2020/009136
(87) International publication number: WO 2021/053856

(57) **Abstract**

An automatic analysis device including liquid containers 3, 4, and 5 for storing liquid and liquid sending units 8, 9, and 10 for sending the liquid in the container through flow paths includes a detector 102 for detecting gas in the flow path, a priming function unit for replacing the liquid in the flow path, and a control device 29 for determining that bubbles are incorporated in the liquid in the flow path when the detector detects gas in the flow path. With this configuration, the incorporation of bubbles into a liquid and a shortage of a reagent can be more efficiently identified.

## Description

### Technical Field

The present invention relates to an automatic analysis device.

### Background Art

In an automatic analysis device including a container that holds a liquid, and a liquid sending unit that sends a liquid via a flow path, it is an abnormal state that a gas is incorporated in the flow path which should be filled with the liquid, and the abnormal states need to be dealt with. An example of such an automatic analysis device is an electrolyte analysis device.

An electrolyte analysis device is a device for measuring a concentration of a specific electrolyte contained in an electrolyte solution such as blood and urine of a human body, and uses an ion selective electrode to measure the concentration. As a general measurement method, serum which is an electrolyte solution is directly supplied to, or a sample solution obtained by performing diluting with a diluent solution is supplied to the ion selective electrode to measure a liquid junction potential with a reference electrode solution. Next (or prior to the measurement), a standard solution is supplied to the ion selective electrode, a liquid junction potential between the reference electrode solution and the standard solution is measured in the same manner, and a potential of the sample solution is calculated based on the two liquid junction potential levels. A sample having a known concentration is measured to obtain a calibration curve, which is used for calculating a concentration of an unknown sample. In the electrolyte analysis device, reagents such as the diluent solution, the standard solution, and the reference electrode solution are placed in a bottle and installed as consumables in the device, and the reagents are supplied to necessary places via the flow path.

If the reagents are properly supplied from a reagent container, the flow path will be filled with liquid. On the other hand, a state in which the flow path becomes empty due to the incorporation of bubbles or lack of the reagent is an abnormal state in which a correct measurement result cannot be obtained, and it is necessary to interrupt and cope with the measurement. Therefore, one of the expectations of the electrolyte analysis device is to immediately notify an operator and when such an abnormal state occurs and shorten the unmeasurable time. It is also desirable that the device automatically returns to a normal state without taking time and effort of the operator.

The following are examples of related-art techniques for devices having a function of detecting gas in the flow path. For example, PTL 1 discloses an automatic analysis device that has a function of detecting bubbles in a flow path, executing a prime function a plurality of times to eliminate the bubbles when the bubbles are detected, and checking whether the bubbles have been eliminated every time when each function is executed. PTLs 2, 3, and 4 disclose an automatic analysis device that has a function of detecting a gas in a flow path to determine a shortage of a capacity of a connection destination container. PTL 5 discloses a device that has a function of detecting bubbles, has a function of automatically performing priming when the bubbles are detected, and determines that there is an abnormality when it is determined that the bubbles are present even after priming a reagent.

### Citation List

### Patent Literature

PTL 1: JP-A-2016-188872
PTL 2: WO2010/107042
PTL 3: JP-A-2014-238408
PTL 4: JP-A-2014-139580
PTL 5: JP-A-2015-114120

### Summary of Invention

### Technical Problem

In the electrolyte analysis device, since the incorporation of bubbles in the flow path and a shortage of the reagent are different from each other in terms of the measures required to resume the measurement, it is desirable that both of the incorporation of bubbles and the shortage of the reagent are correctly identified and made to be known to the operator. In a case of bubble incorporation, the bubbles are discharged by a reagent replacement function (reagent prime) in the flow path, and the measurement can be resumed if the discharge of the bubbles can be confirmed. On the other hand, in a case of the shortage of the reagent, it is necessary to replace a reagent container, prime the reagent, and perform calibration. In particular, a standard solution having a known concentration is measured to obtain a calibration curve, and if concentration or component denaturation occurs, the reliability of the calibration result will be impaired, and therefore preparation and installation timing of the standard solution must be properly controlled, and it takes time and effort to resume the measurement compared to the incorporation of the bubbles. Therefore, both are identified, and a risk of erroneous determination of the shortage of the reagent should be reduced.

However, the related-art technique described in PTL 1 is not intended to determine whether the reagent is insufficient. In the related-art technique described in PTLs 2, 3 and 4, it is not assumed that gas is incorporated and discharged. In the related-art technique described in PTL 5, the presence or absence of gas needs to be confirmed by a special operation after priming the reagent. That is, in the above related-art technique, it is not intended to distinguish between the incorporation of bubbles and the shortage of the reagent by the same detector. Alternatively, even when it is possible to distinguish between the incorporation of bubbles and the shortage of the reagent, it cannot be said that the function of efficiently discriminating between the two is provided.

The invention is made in view of the above circumstances, and an object thereof is to provide an automatic analysis device capable of more efficiently identifying incorporation of bubbles in a liquid and a shortage of a reagent.

### Solution to Problem

The present application includes a plurality of solutions to the problem, and an example thereof is an automatic analysis device including a liquid container that holds a liquid, and a liquid sending unit that sends a liquid in the liquid container via a flow path. The automatic analysis device includes: a detector that detects gas in the flow path; a priming function unit that replaces the liquid in the flow path; and a control unit that determines that bubbles are incorporated in the liquid in the flow path when the detector detects gas in the flow path, in which when it is determined that bubbles are incorporated in the liquid in the flow path, the control unit controls the priming function unit to replace the liquid in the flow path and if the detector detects the gas again during the replacement of the liquid, the control unit determines that the reagent is in a shortage state in which the required amount of liquid is not present in the liquid container and stops analysis processing of the automatic analysis device.

### Advantageous Effect

According to the invention, it is possible to more efficiently identifying incorporation of bubbles in a liquid and a shortage of a reagent.

### Brief Description of Drawings

[Fig. 1] Fig. 1 is a diagram schematically showing the entire configuration of an electrolyte analysis device.
[Fig. 2] Fig. 2 is a flowchart illustrating an example of a treatment process when detecting a bubble.
[Fig. 3] Fig. 3 is a flowchart illustrating an example of a treatment process when a reagent is insufficient.
[Fig. 4] Fig. 4 is a flowchart illustrating an example of determination processing of bubble detection and reagent shortage.

### Description of Embodiments

An embodiment of the invention will be described below with reference to the drawings. In the present embodiment, an electrolyte analysis device is described as an example of an automatic analysis device including a liquid container that holds a liquid such as a reagent, a detergent, water, or a diluent, and a liquid sending unit that sends a liquid via a flow path, but the present invention is also applicable to other automatic analysis devices including a liquid container that holds a liquid, a liquid sending unit, or the like. Examples of the other automatic analysis devices include, for example, a biochemical automatic analyzer, an immune automatic analyzer, a mass spectrometer used for clinical examination, a coagulation analyzer for measuring blood coagulation time, and an automatic analysis system applying these.

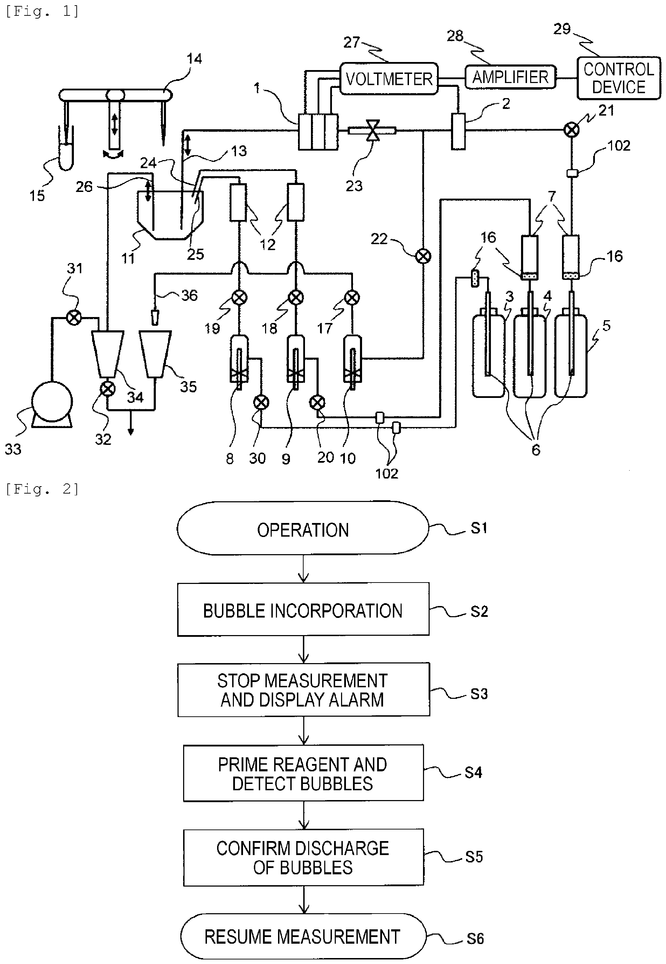

Fig. 1 is a diagram schematically showing the entire configuration of the electrolyte analysis device as an example of the automatic analysis device. The electrolyte analysis device is not limited to a device used alone, and may be, for example, mounted as one function of the automatic analysis device together with other devices.

The electrolyte analysis device shown in Fig. 1 is a flow-type electrolyte analysis device using an ion selective electrode (hereinafter, referred to as ISE electrode). Fig. 1 shows five mechanisms including a sample dispensing part, an ISE electrode unit, a reagent part, a mechanism part, and a waste solution mechanism as main mechanisms of the electrolyte analysis device, and a control device that controls the operation of the entire electrolyte analysis device including these mechanisms to acquire a measurement result, and also calculates and displays an electrolyte concentration from the measurement result.

The sample dispensing part includes a sample probe 14. The sample probe 14 dispenses a sample such as a patient specimen held in a sample container 15 and transmits the sample into the analyzing device. Here, the specimen is a general term for analysis targets collected from a living body of a patient, and is, for example, blood or urine. An analysis target obtained by performing a predetermined pretreatment on blood, urine, or the like is also referred to as a specimen.

The ISE electrode unit includes a dilution tank 11, a sipper nozzle 13, a diluent nozzle 24, an internal standard solution nozzle 25, an ISE electrode 1, a reference electrode 2, a pinch valve 23, a voltmeter 27, and an amplifier 28.

The sample dispensed by the sample dispensing part is discharged to the dilution tank 11, and is diluted and stirred with a diluent solution discharged from the diluent nozzle 24 into the dilution tank 11. The sipper nozzle 13 is connected to the ISE electrode 1 by the flow path, and the diluted sample solution suctioned from the dilution tank 11 is sent to the ISE electrode 1 through the flow path. On the other hand, a reference electrode solution accommodated in a reference electrode solution bottle 5 is sent to the reference electrode 2 by operating a sipper syringe 10 in a state where the pinch valve 23 is closed. When the diluted sample solution sent to the ISE electrode through the flow path and the reference electrode solution sent to the reference electrode through the flow path come into contact with each other, the ISE electrode 1 and the reference electrode 2 are electrically conducted.

The ISE electrode unit measures a concentration of a specific electrolyte contained in the sample based on a potential difference between the ISE electrode 1 and the reference electrode 2. Specifically, the ISE electrode 1 is attached to an ion sensitive membrane having a property that a electromotive force changes according to a concentration of a specific ion (for example, sodium ion (Na+), potassium ion (K+), chlorate ion (Cl-), and the like) in a sample solution, and the ISE electrode 1 outputs an electromotive force according to a concentration of each ion in the sample solution, so that the voltmeter 27 and the amplifier 28 acquire the electromotive force between the ISE electrode 1 and the reference electrode 2.

A control device 29 calculates the concentration of the ion in the specimen based on the acquired electromotive force for each ion, and displays the concentration. The sample solution remaining in the dilution tank 11 is discharged by the waste solution mechanism.

The potential difference between the ISE electrode 1 and the reference electrode 2 is influenced by a temperature change and the like. In order to correct a potential change due to the influence of such temperature change and the like, in a period from completion of one sample measurement to a next sample measurement, an internal standard solution is discharged from the internal standard solution nozzle 25 into the dilution tank 11, and the measurement is performed in the same manner as in the case of the above sample (however, dilution of the internal standard solution is not performed). It is preferable to make a correction according to a change amount using a measurement result of the internal standard solution performed during the sample measurements.

The reagent part includes suction nozzles 6 that suction a reagent from a reagent container, degassing mechanisms 7, and filters 16, and supplies a reagent necessary for measurement. When the electrolyte measurement is performed, three types of reagents, which are the internal standard solution, the diluent solution, and the reference electrode solution, are used as the reagent, and an internal standard solution bottle 3 in which the internal standard solution is accommodated, a diluent bottle 4 in which the diluent solution is accommodated, and the reference electrode solution bottle 5 in which the reference electrode solution is accommodated are set as reagent bottles in the reagent part. Fig. 1 shows this state. A cleaning solution bottle that stores a cleaning solution when the device is cleaned is set as a reagent bottle in the reagent part.

The internal standard solution bottle 3 and the diluent bottle 4 are respectively connected to the internal standard solution nozzle 25 and the diluent nozzle 24 through the flow paths including the filters 16, and each nozzle is formed in a shape in which a tip end of the nozzle is introduced into the dilution tank 11. The reference electrode solution bottle 5 is connected to the reference electrode 2 through the flow path via the filter 16. The degassing mechanisms 7 are connected to the flow path between the diluent bottle 4 and the dilution tank 11, and the flow path between the reference electrode solution bottle 5 and the reference electrode 2, respectively. A degassed reagent is supplied into the dilution tank 11 and the reference electrode 2. Accordingly, since a negative pressure is applied to the flow path by a syringe to suction up the reagent from the reagent bottle, a gas dissolved in the reagent may appear as bubbles in the reagent, and the degassing mechanisms 7 are provided such that the reagent is not supplied to the dilution tank 11 or the reference electrode 2 with bubbles contained therein.

The mechanism part includes an internal standard solution syringe 8, a diluent syringe 9, the sipper syringe 10, solenoid valves 17, 18, 19, 20, 21, 22, 30, and preheaters 12, and sends liquid within each mechanism or between the mechanisms and the like. For example, the internal standard solution and the diluent solution are sent to the dilution tank 11 by respective operations of the internal standard solution syringe 8 and the diluent syringe 9 and operations of the solenoid valves provided in the flow paths. The preheater 12 reduces an influence of the temperature on the ISE electrode 1 by controlling temperatures of the internal standard solution and the diluent solution reaching the ISE electrode 1 within a certain range.

The waste solution mechanism includes a first waste liquid nozzle 26, a second waste solution nozzle 36, a vacuum bottle 34, a waste liquid receiver 35, a vacuum pump 33, and solenoid valves 31, 32, and discharges the sample solution remaining in the dilution tank 11 and a reaction solution remaining in the flow path of the ISE electrode unit.

Electrolyte concentration measuring operations performed by an electrolyte measuring device shown in Fig. 1 will be described. The measuring operations are controlled by the control device 29.

First, the sample dispensed from the sample container 15 by the sample probe 14 of the sample dispensing part is discharged to the dilution tank 11 of the ISE electrode unit. After the sample is dispensed into the dilution tank 11, the diluent nozzle 24 discharges the diluent solution from the diluent bottle 4 by an operation of the diluent syringe 9 to dilute the sample. As described above, in order to prevent bubbles from being generated due to changes in the temperature and pressure of the diluent solution in the flow path, the degassing mechanisms 7 attached in a middle of the diluent solution flow paths perform a degassing process. The diluted sample solution is suctioned into the ISE electrode 1 by operations of the sipper syringe 10 and the solenoid valve 22.

On the other hand, the pinch valve 23 and the sipper syringe 10 send the reference electrode solution into the reference electrode 2 from the reference electrode solution bottle 5. The reference electrode solution is, for example, a potassium chloride (KCl) aqueous solution having a predetermined concentration, and when the sample solution and the reference electrode solution are in contact with each other, the ISE electrode 1 is electrically conducted to the reference electrode 2. An electrolyte concentration of the reference electrode solution is preferably high so as to reduce the influence of the concentration change during the sending of the sample, but it is desirable that the concentration is between 0.5 mmol/L and 3.0 mmol/L since the solution may crystallize and cause clogging of the flow path when the concentration is close to a saturation concentration. An ISE electrode potential with reference to a reference electrode potential is measured using the voltmeter 27 and the amplifier 28.

The internal standard solution of the internal standard solution bottle 3 set in the reagent part before and after the sample measurement is discharged to the dilution tank 11 by the internal standard solution syringe 8, and an electrolyte concentration of the internal standard solution is measured in the same manner as the sample measurement.

The control device 29 executes calculation by using the ISE electrode potential measured for the sample solution to calculate the electrolyte concentration in the sample. At this time, by executing calibration based on the ISE electrode potential measured for the internal standard solution, the electrolyte concentration can be more accurately measured.

The control device 29 can be configured as a computer including a central processing unit (CPU), a random access memory (RAM), a storage device, and an I/O port, and the RAM, the storage device, and the I/O port can exchange data with the CPU via an internal bus. The I/O port is connected to the above mechanisms to control operations thereof. The operations are controlled by reading a program stored in the storage device into the RAM and executing the program by the CPU. An input and output device is connected to the control device 29, so that an input from a user and display of a measurement result can be executed.

Next, a bubble detector of the electrolyte analysis device according to the present embodiment will be described. As shown in Fig. 1, detectors 102, as detectors for detecting bubbles, are respectively provided on the flow path connecting the internal standard solution bottle 3 to the dilution tank 11, the flow path connecting the degassing mechanism 7 connected to the flow path from the diluent bottle 4 to the dilution tank 11, and the flow path connecting the degassing mechanism 7 connected to a flow path from the reference electrode solution bottle 5 to the reference electrode 2. As described above, in order to prevent bubbles from being generated due to changes in the temperature and pressure of the diluent solution in the flow path, the degassing mechanism 7 attached in the middle of the diluent solution flow path performs the degassing process, but it is also assumed that not all of the gases may be removed. Therefore, the detectors 102 are preferably provided at positions downstream of the degassing mechanisms 7 so as to be able to detect bubbles that have not been removed by the degassing mechanisms 7. The detectors 102 in the present embodiment are optical type, and may identify whether the flow path is filled with a liquid or a gas by converting a difference in wavelength between a state in which the flow path is filled with a liquid and a state in which the flow path is filled with a gas into an electric signal and acquiring the electric signal. The control device 29 determines whether bubbles are incorporated in the liquid in the flow path based on identification results of the detectors 102. Specifically, the control device 29 calculates an amount of gas (bubbles) in the flow path from a liquid sending amount obtained from drive amounts of the syringes 8, 9, and 10 and the identification results, and determines that the gas (bubbles) is incorporated in the liquid in the flow path when the amount of gas exceeds a reference amount which is determined and stored in advance.

As described above, the reagent of the electrolyte is suctioned and discharged by a flow method, and the flow path is filled with the liquid. When the gas (bubbles) is incorporated in the flow paths of the internal standard solution and the diluent solution, the pressure in the flow paths cannot be correctly transmitted, and a dispensing failure occurs. Incorporation of bubbles in the flow path of the reference electrode solution causes noise at the time of measuring the electromotive force and becomes a factor of variation. In order to improve a reliability of a measurement value, it is necessary to detect bubbles in the flow path and perform the measurement in a state where there is no bubble. In addition to the incorporation of bubbles, a shortage of reagents may be mentioned as a situation in which the flow path becomes a gas. In both cases, it is necessary to take measures, and the measures to be taken before resuming measurement are different.

Fig. 2 is a flowchart illustrating processing contents until the measurement is resumed when a bubble is detected during the operation.

During the operation of the electrolyte analysis device (step S1), when it is determined that bubbles affecting the measurement result are incorporated (step S2), the device interrupts the measurement operation and displays an alarm on a display unit (not shown) provided in the control device 29 (step S3). After the measurement operation is stopped, the reagent prime is executed while continuing bubble detection in order to discharge bubbles in the flow path in which bubbles are detected (step S4).

Reagent prime is achieved by control by a priming function unit, which is a function unit of the control device 29, and if the liquid is an internal standard solution, the internal standard solution is discharged to the dilution tank 11 using the internal standard solution syringe 8. Thereafter, the internal standard solution in the dilution tank 11 is suctioned by the vacuum pump 33 by the first waste liquid nozzle 26 and drained. By repeating this operation a plurality of times, liquid in the entire flow path may be replaced with a new reagent. Similarly, if the liquid is a diluent solution, the internal standard solution is discharged to the dilution tank 11 using the diluent syringe 9. Thereafter, the diluent solution in the dilution tank 11 is suctioned by the vacuum pump 33 by the first waste liquid nozzle 26 and drained. By repeating this operation a plurality of times, liquid in the entire flow path may be replaced with a new reagent. If the liquid is a reference electrode solution, the pinch valve 23 is closed, the solenoid valve 22 is opened, and then the reference electrode solution is discharged to the waste liquid receiver 35 using the sipper syringe 10. By repeating this operation a plurality of times, liquid in the entire flow path may be replaced with a new reagent. Even in the case of the reagent prime, it is confirmed by the detectors 102 that bubbles are not incorporated (step S5), and when the bubbles are not detected, it is determined that the bubbles in the flow path are discharged and the measurement can be resumed (step S6). Since the measurement can be resumed when the bubbles are discharged, a rack on which the specimen is placed may be kept on standby during the reagent prime, and the measurement may be resumed after the bubbles are discharged.

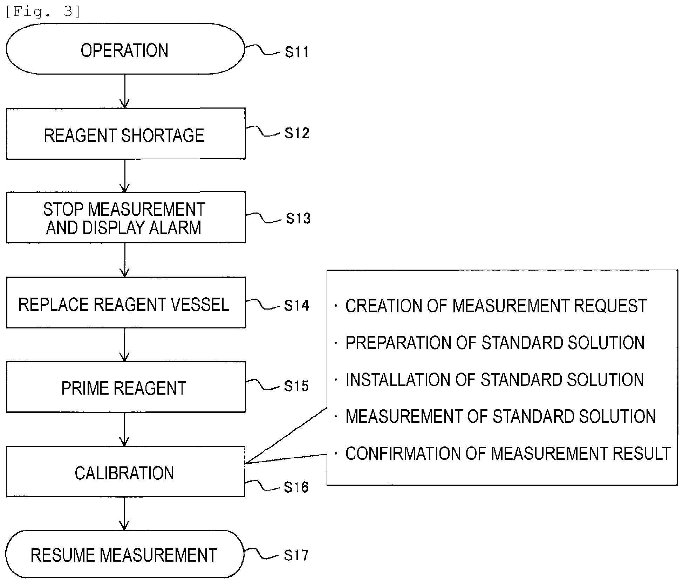

Fig. 3 is a flowchart illustrating the processing contents until the measurement is resumed when a reagent is insufficient.

During the operation of the electrolyte analysis device (step S11), if the reagent in the reagent container is insufficient, the measurement cannot be continued. Accordingly, when it is determined that the reagent is insufficient (step S12), the measurement operation is stopped, and an alarm is displayed on the display unit (not shown) provided in the control device 29 (step S13). The corresponding reagent container is replaced (step S14), the reagent prime is executed to fill the flow path with a new reagent (step S15), and removal of bubbles is confirmed by the processing shown in the flowchart of Fig. 2. Since the electromotive force obtained by the electrolyte analysis device varies depending on the lot of a reagent used for measurement and a state after opening, the calibration must be performed at the time of reagent replacement (step S16) to obtain a new calibration curve.

As shown in step S16, in the calibration, a request is made, a standard solution having a known concentration is installed in the device, and measurement is performed. After completion of the measurement, when it is confirmed that a correct calibration curve is obtained, the measurement of the specimen can be resumed. Since the reliability of the calibration curve is impaired when the concentration or the component modification occurs in the standard solution, it is necessary to pay attention to preparation and management of device installation timing. As described above, the shortage of the reagent requires time and effort until the measurement is resumed, as compared with the case where bubbles are incorporated.

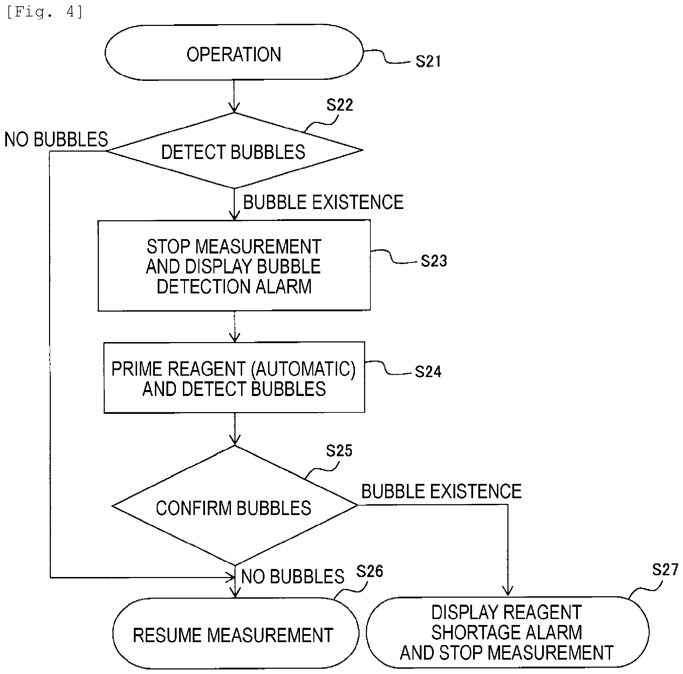

Fig. 4 is a flowchart illustrating determination processing of bubble incorporation and reagent shortage according to the invention.

During the operation of the electrolyte analysis device (step S21), the control device 29 determines whether a gas (bubbles) is incorporated in the liquid in the flow path based on the detection result from the detectors 102 (step S22), and when it is determined that bubbles are incorporated, the measurement is interrupted and an alarm is displayed (step S23). Subsequently, the reagent prime is automatically performed to discharge the bubbles while continuing the bubble detection (step S24). Subsequently, it is determined whether a gas (bubbles) is incorporated in the flow path after the reagent prime (step S25), and when it is determined that no bubble is incorporated, the measurement is resumed (step S26) . When it is determined in step S25 that bubbles are incorporated, an alarm is displayed on the display unit and the measurement is stopped (step S27). A state in which bubbles are incorporated even in the reagent prime is estimated to be a state in which the reagent of an amount that can be normally suctioned is not present in the reagent container, and thus it is determined that the reagent is insufficient.

A size and a pattern of the bubbles incorporated in the flow path are not uniform, and vary depending on a liquid property and a residual liquid amount of the reagent, a structure of the flow path, and the like. For example, in the case of a reagent containing a surfactant, the flow path may be filled with a large number of bubbles because bubbles are easily formed when bubbles are incorporated. When the amount of the remaining liquid is such that a tip of the flow path on the reagent container side reaches or does not reach the liquid, bubbles are intermittently incorporated, but when the tip of the flow path is completely separated from the liquid, the flow path is occupied by gas. Therefore, if bubbles are re-detected during the reagent prime, the reagent prime may be stopped halfway. A threshold may be set for the size and the frequency of the bubbles to be incorporated, and if the size and the frequency of the bubbles are less than the threshold, the reagent prime may be continued. The device may be a mechanism that has a function of setting the number of executions of the reagent prime, stops the bubble detection until the set number of executions, and starts the bubble detection when the set number of executions exceeds.

In the present embodiment configured as described above, the bubble detection and the shortage of reagent may be identified without providing separate determination functions, that is, bubble incorporation and the shortage of reagent may be identified by a detection function. Since the shortage of reagent is not determined based on a single bubble detection result but is determined by including bubble detection during the reagent prime operation, it is possible to reduce the risk of erroneous detection of the shortage of reagent. Since the reagent prime and the check of the reagent determination are performed at the same time, it is not necessary to separately provide a time for determining the shortage of the reagent after the reagent prime, and it is possible to more efficiently identify the incorporation of bubbles in the liquid and the shortage of reagent.

### <Appendix>

The invention is not limited to the above-described embodiment, and includes various modifications and combinations without departing from the scope thereof. The invention is not limited to a configuration including all the configurations described in the above embodiment, and includes a configuration in which a part of the configuration is deleted. Each of the above-mentioned configurations, functions, and the like may be partially or entirely implemented by hardware such as through design using an integrated circuit. The configurations, functions, etc. may also be realized by software by a processor interpreting and executing a program that realizes each function.

### Reference Sign List

1: ion selective electrode, 2: reference electrode, 3: internal standard solution bottle, 4: diluent bottle, 5: reference electrode solution bottle, 6: suction nozzle, 7: degassing mechanism, 8: internal standard solution syringe, 9: diluent syringe, 10: sipper syringe, 11: dilution tank, 12: preheater, 13: sipper nozzle, 14: sample probe, 15: sample vessel, 16: filter, 17, 18, 19, 20, 21, 22, 30, 31, 32, 41, 42: solenoid valve, 23: pinch valve, 24: diluent nozzle, 25: internal standard solution nozzle, 26: first waste liquid nozzle, 27: voltmeter, 28: amplifier, 29: control device, 33: vacuum pump, 34: vacuum bottle, 35: waste liquid receiver, 101: reagent vessel, 102: bubble detector

## Claims

1. An automatic analysis device comprising a liquid container that holds a liquid, and a liquid sending unit that sends a liquid in the liquid container via a flow path, further comprising:
a detector configured to detect gas in the flow path;
a priming function unit configured to replace the liquid in the flow path; and
a control unit configured to determine that bubbles are incorporated in the liquid in the flow path when the detector detects gas in the flow path, wherein
when it is determined that bubbles are incorporated in the liquid in the flow path, the control unit controls the priming function unit to replace the liquid in the flow path and if the detector detects the gas again during the replacement of the liquid, the control unit determines that the reagent is in a shortage state in which the required amount of liquid is not present in the liquid container and stops the analysis processing of the automatic analysis device.

2. An automatic analysis device comprising:
a flow path connecting an internal standard solution bottle, which is a liquid container for storing an internal standard solution, and a dilution tank,
a flow path connecting a diluent bottle, which is a liquid container for storing a diluent, and the dilution tank,
an internal standard solution syringe configured to send the internal standard solution to the dilution tank,
a diluent syringe configured to send the diluent to the dilution tank;
a flow path connecting a reference electrode solution bottle, which is a liquid container for storing a reference electrode solution, and a reference electrode, and
a sipper syringe configured to send the reference electrode solution to the reference electrode, the device further comprising:
a detector configured to detect gas in the flow path,
a priming function unit configured to replace the liquid in the flow path, and
a control unit configured to determine that bubbles are incorporated in the liquid in the flow path when the detector detects gas in the flow path, wherein
when it is determined that bubbles are incorporated in the liquid in the flow path, the control unit controls the priming function unit to replace the liquid in the flow path and if the detector detects the gas again during the replacement of the liquid, the control unit determines that the reagent is in a shortage state in which the required amount of liquid is not present in the liquid container and stops the analysis processing of the automatic analysis device.

3. The automatic analysis device according to claim 1 or 2, further comprising:
a degassing module arranged upstream of the detector of the flow path, wherein
when it is determined that bubbles are incorporated in the liquid in the flow path, the control unit controls the priming function unit to replace the liquid in the flow path, and if the detector detects the gas again during the replacement of the liquid, the control unit determines that the reagent is in a shortage state in which the required amount of liquid is not present in the liquid container and stops the analysis processing of the automatic analysis device.

4. The automatic analysis device according to claim 1 or 2, wherein
the control unit determines that bubbles are incorporated in the flow path when the amount of gas in the flow path detected by the detector exceeds a preset reference amount.
